# EUROPÄISCHE PATENTSCHRIFT

(11) **EP 1 357 207 B1**
(45) Veröffentlichungstag und Bekanntmachung des Hinweises auf die Patenterteilung: **18.11.2009**
(21) Anmeldenummer: 03006688.0
(22) Anmeldetag: 26.03.2003
(51) Int. Cl.: D01D 5/253, D01F 6/60, B60R 21/16

(54) **Hochfestes Garn mit profilierten Filamenten**
High tenacity yarn with profiled filaments
Fil à haute tenacité avec filaments profilés

(30) Priorität: 24.04.2002 EP 02009109
(43) Veröffentlichungstag der Anmeldung: 29.10.2003
(73) Patentinhaber: Polyamide High Performance GmbH, 42103 Wuppertal (DE)
(72) Erfinder: Koehnen, Ralf, 42117 Wuppertal (DE); Leymann, Frank, 41747 Viersen (DE); Konrad, Britta, 42113 Wuppertal (DE); Berberich, Gerhard, 63849 Leidersbach (DE); Graefe, Hans Albert, 58332 Schwelm (DE); Tulke, Andreas, 63906 Erlenbach (DE); Xiao, Qiao, 63906 Erlenbach (DE)
(74) Vertreter: Oberlein, Gerriet H. R.

(56) Entgegenhaltungen:
- EP-A- 0 616 061
- EP-A- 0 773 140
- WO-A-98/38360
- DE-A- 1 669 454

## Beschreibung

Die vorliegende Erfindung befasst sich mit einem Garn, enthaltend Filamente aus synthetischen Polymeren mit einem Querschnitt, der mindestens 5 Ecken aufweist.

Derartige Garne sind zur Herstellung von Textilien und Teppichen bekannt. Sie werden bisher eingesetzt, um das Aussehen der Textilien oder Teppiche zu verbessern. Bei der Herstellung von textilen Flächengebilden wie Geweben, Gestricken, Gewirken oder Vliesen aus Garnen, die Filamente aus synthetischen Polymeren enthalten, wird beobachtet, dass die hergestellten Gewebe einen Glanz aufweisen, der häufig nicht gewünscht ist. Insofern enthalten die Filamente dieser Garne häufig Mattierungsmittel. Um den Glanz in den textilen Flächengebilden weiter zu reduzieren, werden Garne eingesetzt, die einen profilierten Querschnitt aufweisen. So werden beispielsweise in EP 0 605 333 Filamente mit Mattierungsmittel und mit multilobalem Querschnitt, der wenigstens 5 Lappen enthält, zur Herstellung von Teppichen eingesetzt, wobei die Filamente im fertigen Teppich eine gute Kräuselbeständigkeit aufweisen und nicht glänzen. Die Filamente weisen einen Einzeltiter von 20 dtex auf.

Bei der Herstellung von technischen Geweben, insbesondere Airbag - Geweben, spielt der Glanz kaum eine Rolle. Es kommt bei der Herstellung dieser Gewebe im wesentlichen darauf an, Garne mit Filamenten einzusetzen, die hohe Festigkeit aufweisen und gute Faltbarkeit gewährleisten. Insofern werden Garne mit hoher Festigkeit und geringem Einzeltiter bevorzugt. Da in der Fachwelt davon ausgegangen wird, dass Garne, deren Filamente profilierten Querschnitt aufweisen, eine geringere Festigkeit aufweisen als Garne aus Filamenten mit rundem Querschnitt, wurden derartige Garne als für den Einsatz in technischen Geweben als nicht brauchbar angesehen.

Zur Herstellung von technischen Geweben eigenen sich Garne aus Polyester, insbesondere Garne aus Polyamid, wie beispielsweise Polyamid 4, Polyamid 4 6 und insbesondere Polyamid 6 6. Insbesondere bei Airbag - Geweben sollen die fertigen Gewebe eine sehr geringe Luftdurchlässigkeit aufweisen. Die Luftdurchlässigkeit dieser Gewebe kann weiter verringert werden, wenn diese nach ihrer Herstellung, beispielsweise mit Silikon, beschichtet werden. Die Beschichtung der Gewebe ist jedoch problematisch, weil an den hoch entwickelten Filamenten der eingesetzten Garne eine Beschichtung häufig schlecht haftet.

Aufgabe der vorliegenden Erfindung ist es, ein Garn zur Verfügung zu stellen, durch welches die oben beschriebenen Nachteile bei der Herstellung und dem Gebrauch von technischen Geweben, insbesondere von Airbag - Geweben, deutlich reduziert sind.

Gelöst wird diese Aufgabe durch ein Garn, enthaltend Filamente aus synthetischen Polymeren mit einem Querschnitt, der 5 bis 8 aufweist, einem Titer von 1 bis 7 dtex und einer Festigkeit von mindestens 60 cN/tex.

Es hat sich nämlich gezeigt, dass Gewebe, die aus derartigen Garnen hergestellt sind, von Natur aus schon eine geringere Luftdurchlässigkeit aufweisen als Gewebe, die aus Garnen mit Filamenten runden oder ovalen Querschnitts hergestellt sind, und zusätzlich deutlich verbesserte Haftungseigenschaften gegenüber Beschichtungsmaterialien aufweisen. Auch wurde überraschend festgestellt, dass Garne aus Filamenten mit vieleckigem Querschnitt auch mit hoher Festigkeit hergestellt werden können.

Das erfindungsgemäße Garn zeichnet sich bevorzugt dadurch aus, dass der Querschnitt der Filamente 5 bis 8 Ecken aufweist, und der Querschnitt der Filamente zwischen den Ecken Vertiefungen aufweist.

Insbesondere hat es sich bei dem erfindungsgemäßen Garn als Vorteil herausgestellt, wenn der Querschnitt der Filamente sternförmig ausgebildet ist, wobei es besonders günstig ist, wenn die Ecken des Querschnitts der Filamente abgerundet sind.

Das erfindungsgemäße Garn zeichnet sich insbesondere dadurch aus, dass die Filamente und auch das aus diesen Filamenten bestehende Garn eine Festigkeit von 60 bis 85 cN/tex aufweisen. Festigkeiten von 65 cN/tex und mehr sind besonders bevorzugt.

Das erfindungsgemäße Garn zeichnet sich auch dadurch aus, dass die Filamente und auch das aus diesen Filamenten bestehende Garn eine Bruchdehnung von 15 bis 35 % aufweisen.

Insbesondere ist ein Garn, bei dem die Filamente und auch das aus diesen Filamenten bestehende Garn einen Heißluftschrumpf, gemessen bei 190 °C und 15 min, von 4 bis 10 % aufweisen, eine vorteilhafte Ausgestaltung der vorliegenden Erfindung. Hierbei wird es möglich, nach Herstellung der Gewebe durch Auslösung des Schrumpfes die Gewebe weiter zu verdichten, wodurch die Luftdurchlässigkeit dieser Gewebe weiter verringert werden kann.

Auch zeichnet sich das erfindungsgemäße Garn dadurch aus, dass die Filamente ein Arbeitsvermögen von 250 bis 400 cN/tex aufweisen. Bekanntlich ist das Arbeitsvermögen festgelegt durch das Produkt aus Festigkeit und der Wurzel der Dehnung.

Die Verwendung des erfindungsgemäßen Garns zur Herstellung von technischen Geweben, insbesondere zur Herstellung von Airbag - Geweben hat sich als besonders vorteilhaft herausgestellt.

Gewebe, die erfindungsgemäße Garne enthalten eigenen sich hervorragend, um sie zur Herstellung von Airbags zu verwenden. Sie zeichnen sich durch besonders geringe Luftdurchlässigkeit aus. Weiterhin hat es sich gezeigt, dass eine Beschichtung derartiger Gewebe besonders gut haftet, sodass bei Verarbeitung dieser beschichteten Gewebe zu Airbags nicht die Gefahr besteht, dass die Beschichtung verletzt wird, so dass die durch die Einstellung des Gewebes und die anschließende Beschichtung eingestellte Luftdurchlässigkeit auch im fertigen Airbag noch vorhanden ist. Auch ist die Gefahr des Ablösens der Beschichtung beim Falten eines Airbags deutlich geringer.

Die Erfindung wird anhand der nachfolgenden Beispiele näher erläutert:

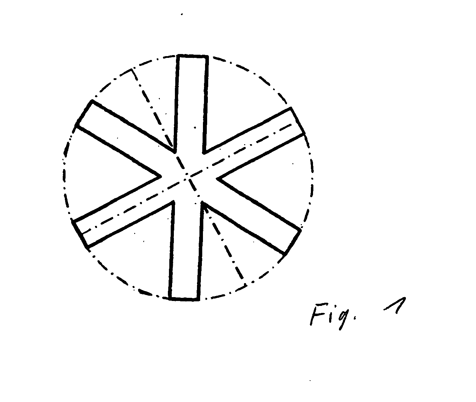

Zur Herstellung der Garne wird als Polymer Polyamid 6.6 mit einer Granulatviskosität von 2,56 (255 G) verwendet. Dieses Granulat wird bei einer Temperatur von 290 °C aufgeschmolzen und durch eine Spinndüse mit 60 mm Durchmesser, die eine Temperatur von 280,5 °C aufweist, extrudiert, wobei jede der 72 Spinnöffnungen dieser Spinndüse drei Rechtecke mit einer Länge von 600 µ und einer Breite von 70 µ aufweist (siehe Figur 1), die sternförmig angeordnet sind und im Zentrum miteinander verbunden sind. Die extrudierten Filamente werden in einem Fallschacht mit Luft von etwa 22 °C mit unterschiedlichen Geschwindigkeiten quer angeblasen und anschließend mit einer Geschwindigkeit von 450 m/min aufgewickelt. Die an der Spindüse eingestellten Drücke, die eingestellten Luftgeschwindigkeiten und die Eigenschaften der erhaltenen Garne sind in der Tabelle 1 aufgeführt.

Bei einer Luftmenge von 50 m³/h ergeben sich Filamente mit sechseckigem Querschnitt, wobei mit zunehmender Luftgeschwindigkeit dieser Querschnitt sich zu ausgeprägter Sternform entwickelt.

Die so hergestellten Garne werden in einem zweiten Arbeitsgang um 1 : 4,326 verstreckt und anschließend um 1 : 0,925 relaxiert, wobei die Verstreckung zwischen einer ersten und zweiten Galette und die Relaxierung zwischen zweiter und einer dritten Galette erfolgt. Zwischen erster und zweiter Galette ist weiterhin eine Heizplatte angeordnet. Die Temperatur der ersten Galette beträgt 97 °C, die Temperatur der Heizplatte 190 °C, die Temperatur der zweiten Galette 230 °C und die Temperatur der dritten Galette 90 °C. Die Eigenschaften der hierdurch erhaltenen Garne sind in Tabelle 2 aufgeführt. Alle Garne weisen einen Heißluftschrumpf von 4,7 % auf.

**Tabelle 1**

| Nr. | Düsendruck bar | Anblasung m³/h | Titer dtex | Dehnung % | Festigkeit cN/tex | Uster % |
|---|---|---|---|---|---|---|
| 1 | 180 | 50 | 998 | 417 | 12,8 | 5,7 |
| 2 | 180 | 100 | 982 | 418,4 | 12,8 | 6,1 |
| 3 | 180 | 150 | 989 | 414,6 | 13,6 | 3,5 |
| 4 | 182 | 200 | 990 | 400,1 | 13,6 | 1,3 |
| 5 | 182 | 250 | 984 | 391,2 | 13,9 | 1,2 |
| 6 | 184 | 300 | 981 | 385,3 | 14,0 | 1,2 |
| 7 | 184 | 350 | 985 | 372 | 14,1 | 1,8 |

**Tabelle 2**

| Nr. | Titer dtex | Dehnung % | Festigkeit cN/tex | Arbeitsvermögen cN/tex | Garnquerschnitt |
|---|---|---|---|---|---|
| 1 | 240,8 | 23,9 | 65,5 | 320 | sechseckig |
| 2 | 238,9 | 23,2 | 66,5 | 320 | |
| 3 | 239,2 | 20,5 | 65,1 | 295 | Figur 2 |
| 4 | 241,2 | 20,4 | 67,0 | 303 | Figur 3 |
| 5 | 239,3 | 18,9 | 67,3 | 293 | |
| 6 | 240,5 | 19,2 | 68,9 | 302 | Figur 4 |
| 7 | 238,7 | 17,3 | 69,2 | 288 | Figur 5 |

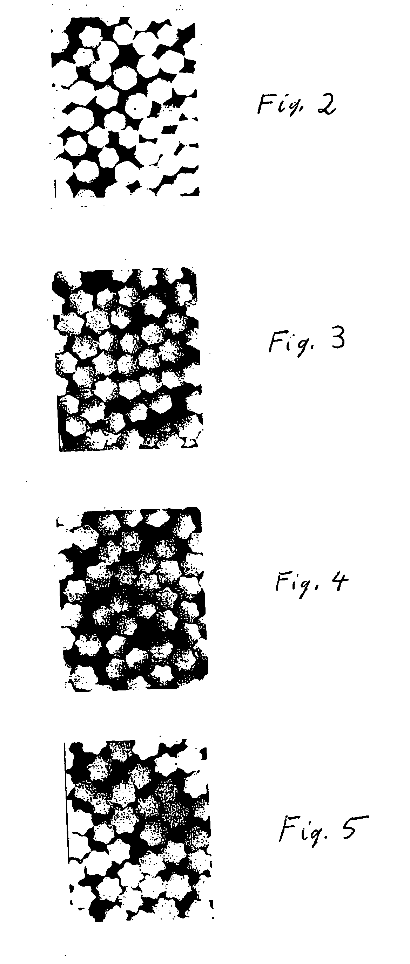

Gemäß der beigefügten Figuren 2 bis 5 werden jeweils Querschnitte der erhaltenen Garne dargestellt. Es wird ersichtlich, dass bei Anblasung im Spinnschacht mit geringer Luftgeschwindigkeit Filamente mit sechseckigem Querschnitt erreicht werden, während bei höherer Luftmenge Filamente mit sternförmigem Querschnitt erreicht werden.

Vergleichbare Garne mit Filamenten mit rundem Querschnitt weisen eine Festigkeit von etwa 69 cN/tex, eine Dehnung von etwa 24 % und einen Heißluftschrumpf von etwa 7,8 % auf.

Stellt man aus den Garnen Gewebe her, kann festgestellt werden, dass die Luftdurchlässigkeit gegenüber Garnen mit Filamenten mit rundem Querschnitt umso geringer wird, je deutlicher die Filamente der verwendeten Garne sternförmigen Querschnitt aufweisen. Ebenso stellt man fest, dass die Haftung einer Silikonbeschichtung umso höher ist, je deutlicher die Filamente sternförmig ausgebildet sind. Insofern kann mit den erfindungsgemäßen Garnen die gewünschte niedrige Luftdurchlässigkeit im Airbag - Gewebe besonders günstig und auf besonders niedrige Werte einstellen.

## Patentansprüche

1. Garn, enthaltend Filamente aus synthetischen Polymeren mit einem Querschnitt, der 5 bis 8 Ecken aufweist, einem Titer von 1 bis 7 dtex und einer Festigkeit von mindestens 60 cN/tex.

2. Garn nach Anspruch 1, **dadurch gekennzeichnet, dass** der Querschnitt der Filamente zwischen den Ecken Vertiefungen aufweist.

3. Garn nach Anspruch 2, **dadurch gekennzeichnet, dass** der Querschnitt der Filamente sternförmig ausgebildet ist.

4. Garn nach einem oder mehreren der Ansprüche 1 bis 3, **dadurch gekennzeichnet, dass** die Ecken abgerundet sind.

5. Garn nach einem oder mehreren der Ansprüche 1 bis 4, **dadurch gekennzeichnet, dass** die Filamente eine Festigkeit von 60 bis 85 cN/tex aufweisen.

6. Garn nach einem oder mehreren der Ansprüche 1 bis 5, **dadurch gekennzeichnet, dass** die Filamente eine Bruchdehnung von 15 bis 35 % aufweisen.

7. Garn nach einem oder mehreren der Ansprüche 1 bis 6, **dadurch gekennzeichnet, dass** die Filamente einen Heißluftschrumpf, gemessen bei 190 °C und 15 min, von 4 bis 10 % aufweisen.

8. Garn nach einem oder mehreren der Ansprüche 1 bis 7, **dadurch gekennzeichnet, dass** die Filamente ein Arbeitsvermögen von 250 bis 400 cN/tex aufweisen.

9. Verwendung des Garns nach einem oder mehreren der Ansprüche 1 bis 8 zur Herstellung von technischen Geweben.

10. Verwendung des Garns nach einem oder mehreren der Ansprüche 1 bis 8 zur Herstellung von Airbag - Geweben.

11. Gewebe enthaltend Garne gemäß einem oder mehreren der Ansprüche 1 bis 8.

## Claims

1. A yarn containing filaments made of synthetic polymers with a cross-section having 5 to 8 vertices, a titre of 1 to 7 dtex and a tenacity of at least 60 cN/tex.

2. Yarn according to Claim 1, **characterised in that** the cross-section of the filaments has indentations between the vertices.

3. Yarn according to Claim 2, **characterised in that** the cross-section of the filaments is star-shaped.

4. Yarn according to one or more of Claims 1 to 3, **characterised in that** the vertices are rounded.

5. Yarn according to one or more of Claims 1 to 4, **characterised in that** the filaments have a tenacity of 60 to 85 cN/tex.

6. Yarn according to one or more of Claims 1 to 5, **characterised in that** the filaments have an elongation at break of 15% to 35%.

7. Yarn according to one or more of Claims 1 to 6, **characterised in that** the filaments have a hot-air shrinkage, measured at 190°C over 15 minutes, of 4% to 10%.

8. Yarn according to one or more of Claims 1 to 7, **characterised in that** the filaments have a stretch recovery of 250 to 400 cN/tex.

9. Use of the yarn according to one or more of Claims 1 to 8 for manufacture of woven industrial fabrics.

10. Use of the yarn according to one or more of Claims 1 to 8 for manufacture of airbag fabrics.

11. Woven fabrics containing yarns in accordance with one or more of Claims 1 to 8.

## Revendications

1. Fil comportant des filaments en polymère synthétique qui présentent une section transversale comportant 5 à 8 angles, un titre de 1 à 7 dtex et une résistance d'au moins 60 cN/tex.

2. Fil conforme à la revendication 1, **caractérisé en ce que** la section transversale des filaments présente des renfoncements entre les angles.

3. Fil conforme à la revendication 2, **caractérisé en ce que** la section transversale des filaments est de forme étoilée.

4. Fil conforme à l'une ou plusieurs des revendications 1 à 3, **caractérisé en ce que** les angles sont arrondis.

5. Fil conforme à l'une ou plusieurs des revendications 1 à 4, **caractérisé en ce que** les filaments présentent une résistance de 60 à 85 cN/tex.

6. Fil conforme à l'une ou plusieurs des revendications 1 à 5, **caractérisé en ce que** les filaments présentent un allongement à la rupture de 15 à 3 5 %.

7. Fil conforme à l'une ou plusieurs des revendications 1 à 6, **caractérisé en ce que** les filaments, exposés à de l'air chaud à 190 °C durant 15 minutes, subissent un retrait de 4 à 10 %.

8. Fil conforme à l'une ou plusieurs des revendications 1 à 7, **caractérisé en ce que** les filaments peuvent être mis en oeuvre sous une tension de 250 à 400 cN/tex.

9. Utilisation d'un fil conforme à l'une ou plusieurs des revendications 1 à 8 pour la fabrication de tissus techniques.

10. Utilisation d'un fil conforme à l'une ou plusieurs des revendications 1 à 8 pour la fabrication de tissus pour air-bags.

11. Tissu contenant des fils conformes à l'une ou plusieurs des revendications 1 à 8.
